# EUROPÄISCHE PATENTSCHRIFT

(11) **EP 1 100 992 B1**
(45) Veröffentlichungstag und Bekanntmachung des Hinweises auf die Patenterteilung: **12.03.2003**
(21) Anmeldenummer: 99926394.0
(22) Anmeldetag: 25.05.1999
(51) Int. Cl.: D21B 1/02, B07B 4/02

(54) **VERFAHREN UND EINRICHTUNG ZUR SORTIERUNG EINES PAPIERGEMISCHES**
METHOD AND DEVICE FOR SORTING PAPER MIXTURES
PROCEDE ET DISPOSITIF DE TRI D'UN MELANGE DE PAPIERS

(43) Veröffentlichungstag der Anmeldung: 23.05.2001
(73) Patentinhaber: ISIS GmbH Servicegesellschaft für Planung und Instandhaltung von Entsorgungs- und Industrieanlagen, 41061 Mönchengladbach (DE)
(72) Erfinder: BUCHHOLZ, Gerd, D-53757 St. Augustin (DE); HÜSKENS, Jürgen, D-41748 Viersen (DE); LENZEN, Clemens, D-41749 Viersen (DE)
(74) Vertreter: Sparing, Rolf Klaus
(86) Internationale Anmeldenummer: EP9903578
(87) Internationale Veröffentlichungsnummer: WO00071810

(56) Entgegenhaltungen:
- EP-A- 0 779 109
- DE-U- 29 709 918
- GB-A- 1 498 108
- US-A- 4 127 476

## Beschreibung

Die vorliegende Erfindung betrifft ein Verfahren und eine Einrichtung zur Sortierung eines Papiergemisches .

In Deutschland werden derzeit ca. 12 Mio. t/a Altpapier in Produktionsprozesse wieder eingesetzt. Von dieser Menge werden wiederum ca. 5,3 Mio. t/a in zahlreichen Einrichtungen vor der jeweiligen Wiederverwertung in verschiedene Sorten sortiert.

Bei den bekannten Einrichtungen und Verfahren zum Sortieren der gesammelten Papiergemische wird Sortierpersonal eingesetzt, um den Inhalt von Depotcontainern, Tonnensammelware und/oder Bündelsammelware in verschiedene Qualitäten aufzutrennen und die jeweils für den Wiedereinsatz geforderten Papier-/Pappe-Qualitäten, u. a. auch Deinking-Qualität, zu erreichen. Bestehende Einrichtungen zum Sortieren eines Papiergemisches umfassen Förder- bzw. Lesebänder mit Sortierpersonal, welches zur Herstellung einer Deinking-Qualität aus dem angelieferten Papiergemisch Störstoffe wie Pappe, Kartonagen und ggf. Bücher u. a. per Hand aussortiert. Bei dieser bekannten Sortierung werden unter anderem auch Pappen und Kartonagen zur Herstellung einer überwiegend Pappe enthaltenden Fraktion ausgelesen.

Auf diese Weise wird eine Fraktion Deinking, eine Fraktion Mischpapier und eine Fraktion Pappe gewonnen. Die Fraktion Deinking besteht weitgehend aus Zeitungen und Illustrierten und weist anforderungsgemäß mindestens 60 % Zeitungen und einen Störstoffanteil. z. B. Kartonage, Pappen, von maximal 3 % auf, während die Fraktion Mischpapier, Zeitungen und Illustrierte (unter 40 %), Pappe, sonstige Papiere, Kartonagen (über 60 %) und in geringeren Anteilen Kunststoffe und andere Störstoffe enthält. Die Fraktion Pappe besteht zum überwiegenden Teil (über 70 %) aus Pappen, Kartonagen und Vollpappen und ähnlichem.

In Abkehr von der bekannten Handsortierung sind Versuche zur Automatisierung unternommen worden, bei welchen Siebmaschinen eingesetzt wurden. Die Ergebnisse entsprachen jedoch nicht den Erwartungen, da der Hauptteil der Störstoffe in Form von Pappe und Kartons nur schlecht von den Zeitungen in Bezug auf Komgröße unterscheidbar ist, so daß Siebungen nur unzureichende Qualitäten ermöglichen.

US-A-4 127 476 offenbart ein Verhahren zur Sortierung eines Papiergemisches, bei dem das Papiergemisch zerkleinert wird und das zerkleinerte Papiergemisch mittels Windsichtung in drei Fraktionen getrennt wird.

Aufgabe der vorliegenden Erfindung ist es, ein Verfahren und eine Einrichtung zur Sortierung eines Papiergemisches anzugeben, mit dem bzw. mit der die Qualitätsanforderungen an Deinking-Qualität zuverlässig erfüllbar sind und eine personalintensive Sortierung vermieden werden kann.

Diese Aufgabe wird durch ein Verfahren und eine Einrichtung mit den Merkmalen des Anspruchs 1 bzw. des Anspruchs 9 gelöst.

Auf diese Weise kann eine manuelle Sortierung entfallen und sowohl der maximale Störstoffanteil von 3 % sowie der minimale Zeitungsanteil von 60 % zuverlässig eingehalten werden.

In ihrer Kombination ermöglichen die Zerkleinerung und die Windsichtung bei einer derartigen Trenngeschwindigkeit darüber hinaus hohe Durchsätze bei einer gleichbleibend hohen Qualität der hergestellten Fraktionen.

Bei einer Zerkleinerung des Papiergemisches auf eine Komgröße im Bereich von etwa 60 bis 90 mm läßt sich eine qualitativ besonders hohe Trennschärfe zwischen Mischpapier und Deinking bei einem relativ geringen Zerkleinerungsaufwand erzielen.

Liegt die Trenngeschwindigkeit im Bereich von 1,5 bis 4,5 m/sec, bevorzugt im Bereich von 1,7 bis 3,5 m/sec, lassen sich besonders hohe Qualitäten bei den hergestellten Fraktionen gewährleisten.

Wird die Windsichtung in einem Kegelsichter durchgeführt, läßt sich ein weitgehend störungsfreier Betrieb und eine gute Trennleistung gewährleisten. Erfolgt die Windsichtung in einem Zick-Zack-Sichter, kann eine besonders hohe Trennschärfe zwischen Mischpapier und Deinking erzielt werden.

Die bei der Windsichtung zunächst entstehende Leichtgutfraktion, die die Deinking-Qualität enthält, wird vorteilhaft in einem Zyklon in den (fördernden) Luftstrom und in Deinking aufgespaltet.

Die Qualität der Fraktion Deinking läßt sich durch eine Nachsortierung mittels einer Farb- und/oder NIR-Erkennung und einem pneumatischen Austrag identifizierter Störstoffe erhöhen. Hierbei können beispielsweise durchgefärbte Papierschnitzel anhand ihrer Größe und Farbgebung effektiv abgetrennt werden, so daß eine im wesentlichen von durchgefärbten Papieren befreite Fraktion Deinking hergestellt werden kann.

Darüber hinaus wird eine nahezu 100 %ige Seperation von Kleberücken aus der Fraktion Deinking gewährleistet, die Verfahrensschritte bei dem Wiedereinsatz infolge von Klebemittelanbackungen ansonsten stören.

Weitere Ausgestaltungen der Erfindung sind den Unteransprüchen und der Beschreibung zu entnehmen.

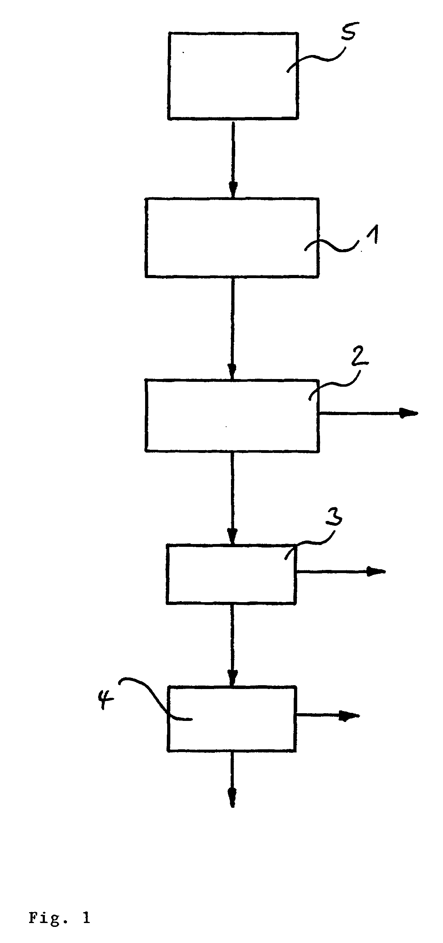

Die Erfindung wird nachstehend anhand eines in der Figur schematisch dargestellten Ausführungsbeispiels einer Einrichtung zur Sortierung eines Altpapiergemisches aus einer Tonnensammlung näher erläutert.

Die in der Figur dargestellte Einrichtung zur Sortierung eines Altpapiergemisches umfaßt einen als Granulator 1 ausgebildeten Zerkleinerer, einen als Kegelsichter 2 ausgebildeten Windsichter, der dem Granulator 1 nachgeschaltet ist, sowie einen dem Kegelsichter 2 nachgeschalteten Zyklon 3.

Bei der Ausbildung des Zerkleinerers 1 kommt es im wesentlichen darauf an, daß mit den Zerkleinerungsmitteln ein Zusammenhaften mehrerer Seiten bei der Zerkleinerung vermieden wird, so daß allenfalls in geringem Umfang aneinander, beispielsweise durch ein blockartiges Stanzen, haftende Papierschnitzel erzeugt werden. Als Zerkleinerer 1 ist beispielsweise auch eine Hammermühle geeignet, bei der eine relativ hohe Staubentwicklung ggf. in Kauf genommen werden kann.

Dem Zyklon 3 ist eine Farbsortiereinrichtung 4 an der Austragsseite der Fraktion Deinking nachgeordnet. Vor den Granulator 1 ist eine als Trommel 5 ausgebildete Auflockerungseinheit geschaltet. Um im Verhältnis zu Papierseiten relativ große und sperrige Kartonagen und Pappe abtrennen zu können, kann der Trommel 5 in weiterer Ausgestaltung der dargestellten Einrichtung ein beispielsweise als Wellensieb ausgebildetes Sieb vor- oder nachgeschaltet werden.

Zur Aufbereitung bzw. Sortierung wird das über eine Tonnensammlung angelieferte, Altpapiergemisch, ggf. gesiebt, in der Trommel 5 aufgelockert und dem Granulator 1 aufgegeben und dort auf eine Korngröße von etwa 70 mm zerkleinert.

Das zerkleinerte Altpapiergemisch wird dann in dem Kegelsichter 2 mittels eines Luftstroms in eine Schwergutfraktion und in eine Leichtgutfraktion aufgespaltet, wobei die Geschwindigkeit des Luftstroms in etwa auf 3 m/sec eingestellt ist. Die Schwergutfraktion enthält die Mischpapierfraktion, die zum Großteil aus stückigem Pappe-/Karton-, sonstigen Papierschnitzeln und zu einem geringen Anteil aus anderen Störstoffen besteht. Die Leichtgutfraktion umfaßt die Fraktion Deinking und den fördernden Luftstrom.

Während die Mischpapierfraktion in einen nicht dargestellten Bunker gelangt, wird die Leichtgutfraktion dem Zyklon 3 zugeleitet und dort in Deinking und Luftstrom aufgetrennt.

Die Fraktion Deinking kann der Sortiereinrichtung 4 zugeleitet und dort von durchgefärbten Papierschnitzeln befreit werden. Ist der Anteil an durchgefärbten Papierschnitzeln hingegen gering, so kann die Fraktion Deinking direkt in einen Sammelbunker geleitet werden.

Um bei der Windsichtung einerseits einen guten Trennschnitt zu erhalten und andererseits eine hohe Durchsatzleistung zu gewährleisten, weist der Windsichter 2 einen Sichtungsquerschnitt von in etwa 0,01 bis 0,4 m², bevorzugt 0,05 bis 0,3 m² auf. Der Volumenstrom an Luft wird derart eingestellt, daß sich eine Trenngeschwindigkeit von in etwa 1 bis 5 m/sec, bevorzugt 1,5 bis 4,5 m/sec und besonders bevorzugt 1,7 bis 3,5 m/sec ergibt.

Nach Durchlauf von Zerkleinerer 1, Kegelsichter 2 und Zyklon 3 fielen in einem Versuch in etwa 40,5 % an Mischpapier und in etwa 59,5 % an Deinking bezogen auf das aufgegebene Altpapiergemisch an. Die Fraktion Deinking besteht dabei zu deutlich mehr als 97,5 % aus dünnem Papier und weist nur einen geringen Anteil an dünner Pappe und sonstigen Störstoffen auf.

Bei einem Versuch, bei dem der Kegelsichter gegen einen Zick-Zack-Sichter ausgetauscht wurde, fielen in etwa 36 % an Mischpapier und in etwa 64 % an Deinking bezogen auf das aufgegebene Altpapiergemisch an.

Bei den angegebenen Trenngeschwindigkeiten lagen in Versuchen die Störstoffanteile, die maßgeblich die Qualität der aus Deinking hergestellten Papiere negativ beeinflussen, wie z. B. Pappe, Kleberücken, Packpapiere und durchgefärbte Papiere bei unter 1,5 % (Massen % bezogen auf den Input).

Störstoffe, die in einer Papierfabrik als Spuckstoffe ausgeschieden werden, wie z. B. Kunststoffe und naßfeste Papiere, lagen bei unter 1 % (Masse % bezogen auf den Input). Das heißt, daß die Störstoffe mit negativem Einfluß auf die Qualität der erzeugten Fraktion Deinking im Vergleich zum Stand der Technik deutlich, um über 30 %, reduziert werden können.

Durch eine Ausgestaltung der Einrichtung mit einem Wellensieb lassen sich große Pappen automatisch abtrennen und eine qualitativ hochwertige Fraktion Pappe auf wirtschaftliche Weise herstellen. Zu den bedeutsamen Teilen der Einrichtung gehört die Auflockerungseinheit, die gewährleistet, daß der Zerkleinerer möglichst einzelne Blätter zugeführt bekommt, damit beim Zerkleinern kein Zusammenpressen eine mehrlagigen Zeitung / Illustrierten an den Schnittkanten erfolgen kann. Dadurch wird die Ausbeute an Deinking deutlich erhöht. Wird auf die Auflockerungseinheit verzichtet, so muß man eine entsprechend geringere Ausbeute in Kauf nehmen, da die dann möglicherweise miteinander verpreßten Papierschnitzel in das Schwergut gelangen würden.

Wird die Windsichtung in Abwandlung zu den vorgenannten Versuchen mittels eines Querstromsichters durchgeführt, läßt sich eine kompakte Bauweise der Windsichtungsstufe mit geringem Investitionsaufwand realisieren.

## Patentansprüche

1. Verfahren zur Sortierung eines Papiergemisches, bei dem
das Papiergemisch auf eine Komgröße in einem Bereich von 40 bis 100 mm zerkleinert wird,
das zerkleinerte Paplergemisch mittels Windsichtung in eine Mischpapier enthaltende Schwergutfrakdon und eine Deinking enthaltende Leichtgutfraktion getrennt wird, und
die Trenngeschwindigkeit bei der Windsichtung zwischen 1 und 5 m/sec beträgt.

2. Verfahren nach Anspruch 1, **dadurch gekennzeichnet, daß** das Papiergemisch auf eine Komgröße im Bereich von 60 bis 90 mm zerkleinert wird.

3. Verfahren nach Anspruch 1 oder 2, **dadurch gekennzeichnet, daß** die Trenngeschwindigkeit 1,5 bis 4,5 m/sec, bevorzugt 1,7 bis 3,5 m/sec beträgt.

4. Verfahren nach einem der Ansprüche 1 bis 3, **dadurch gekennzeichnet, daß** die Windsichtung in einem Kegelsichter erfolgt.

5. Verfahren nach einem der Ansprüche 1 bis 3, **dadurch gekennzeichnet, daß** die Windsichtung in einem Zick-Zack-Sichter erfolgt.

6. Verfahren nach einem der Ansprüche 1 bis 5, **dadurch gekennzeichnet, daß** das Papiergemisch vor der Zerkleinerung in einer Auflockerungseinheit aufgelockert wird.

7. Verfahren nach einem der Ansprüche 1 bis 6, **dadurch gekennzeichnet, daß** die Leichtgutfraktion in einem Zyklon in die Fraktion Deinking und in den Luftstrom aufgespaltet wird.

8. Verfahren nach einem der Ansprüche 1 bis 7, **dadurch gekennzeichnet, daß** die Fraktion Deinking mittels Farb- und/oder NIR-Erkennung nachsortiert wird.

9. Einrichtung zur Sortierung eines Papiergemischs,
mit einem Zerkleinerer (1) zur Zerkleinerung des Papiergemischs, und
einem dem Zerkleinerer (1) nachgeschalteten Windsichter (2) zur Auftrennung des zerkleinerten Papiergemisches in eine Schwergutfraktion und in eine Leichtgutfraktion,
wobei die Schwergutfraktion Mischpapier enthält und die Leichtgutfraktion Deinking enthält,
wobei der Windsichter (2) einen Sichtungsquerschnitt aufweist, in dem eine Trenngeschwindigkeit zwischen 1 und 5 m/sec einstellbar ist.

10. Einrichtung nach Anspruch 9, **dadurch gekennzeichnet, daß** der Zerkleinerer (1) als Granulator oder Rotorschere ausgebildet ist.

11. Einrichtung nach Anspruch 9 oder 10, **dadurch gekennzeichnet, daß** der Zerkleinerer (1) mit Zerkteinerungsmitteln zur Zerkleinerung auf eine Korngröße im Bereich von 40 bis 100 mm ausgestattet ist.

12. Einrichtung nach einem der Ansprüche 9 bis 11, **dadurch gekennzeichnet, daß** der Windsichter (2) als Kegelsichter ausgebildet ist.

13. Einrichtung nach einem der Ansprüche 9 bis 11, **dadurch gekennzeichnet, daß** der windslchter (2) als Zick-Zack-Sichter ausgebildet Ist

14. Einrichtung nach einem der Ansprüche 9 bis 13, **dadurch gekennzeichnet, daß** dem Windsichter (2) ein Zyklon (3) zur Abtrennung der Fraktion Deinking aus der Leichtgutfraktion nachgeschaltet ist.

15. Einrichtung nach einem der Ansprüche 9 bis 14, **dadurch gekennzeichnet, daß** dem Zerkleinerer (1) eine Auflockerungseinheit (5) vorgeschaltet ist.

16. Einrichtung nach Anspruch 14, **dadurch gekennzeichnet, daß** dem Zyklon (3) eine mittels Farb- und/oder NIR-Erkennung arbeitende Sortiereinrichtung (4) für die Fraktion Deinking nachgeschaltet ist.

17. Verwendung einer Einrichtung nach einem der Ansprüche 9 bis 16 zur Erzielung einer maximalen Fraktion Deinkingware aus einem Altpapiergemisch

## Claims

1. Method of sorting a paper mixture in which
the paper mixture is comminuted to a grain size in the range from 40 to 100 mm,
the comminuted paper mixture is separated by air separation into a heavy fraction containing mixed paper and a light fraction containing material for de-inking, and
the separation velocity in the air separation is between 1 and 5 m/sec.

2. Method according to claim 1, **characterised in that** the paper mixture is comminuted to a grain size in the range from 60 to 90 mm.

3. Method according to claim 1 or 2, **characterised in that** separation velocity is 1.5 to 4.5 m/sec and preferably 1.7 to 3.5 m/sec.

4. Method according to one of claims 1 to 3, **characterised in that** the air separation takes place in a cone separator.

5. Method according to one of claims 1 to 3, **characterised in that** the air separation takes place in a zig-zag separator.

6. Method according to one of claims 1 to 5, **characterised in that** prior to the comminution the paper mixture is loosened up in a loosening unit.

7. Method according to one of claims 1 to 6, **characterised in that** the light fraction is divided in a cyclone into the fraction for de-inking and the air stream.

8. Method according to one of claims 1 to 7, **characterised in that** the fraction for de-inking is post-sorted by colour and/or NIR sensing.

9. Device for sorting a paper mixture
having a comminuter (1) for comminuting the paper mixture and
an air separator (2) connected downstream of the comminuter (1), for separating the comminuted paper mixture into a heavy fraction and a light fraction,
the heavy fraction containing mixed paper and the light fraction containing material for de-inking,
the air separator (2) having a separating cross-section in which a separation velocity of between 1 and 5 m/sec can be set.

10. Device according to claim 9, **characterised in that** the comminuter (1) is in the form of a granulator or rotary shear shredder.

11. Device according to claim 9 or 10, **characterised in that** the comminuter (1) is fitted with comminuting means for comminution to a grain size in the range from 40 to 100 mm.

12. Device according to one of claims 9 to 11, **characterised in that** the air separator (2) is in the form of a cone separator.

13. Device according to one of claims 9 to 11, **characterised in that** the air separator (2) is in the form of a zig-zag separator.

14. Device according to one of claims 9 to 13, **characterised in that** the air separator (2) has connected downstream of it a cyclone (3) for separating out the fraction for de-inking from the light fraction.

15. Device according to one of claims 9 to 14, **characterised in that** a loosening unit (5) is connected upstream of the comminuter (1).

16. Device according to claim 14, **characterised in that** connected downstream of the cyclone (3) there is a sorting device (4) for the fraction for de-inking which operates by colour and/or NIR sensing.

17. Use of a device according to one of claims 9 to 16 for obtaining a maximum fraction of material for de-inking from a mixture of waste paper.

## Revendications

1. Procédé de triage d'un mélange de papiers, dans lequel
le mélange de papiers est pulvérisé à une taille dans la plage de 40 à 100 mm,
le mélange de papiers pulvérisé est séparé au moyen d'une séparation à air en une fraction de produits lourds constituée de papiers mélangés et une fraction de produits légers constituée par de désencrage, et
la vitesse de séparation dans la séparation à air est comprise entre 1 et 5 m/s.

2. Procédé selon la revendication 1, **caractérisée en ce que** le mélange de papiers est pulvérisé à une taille dans la plage de 60 à 90 mm.

3. Procédé selon la revendication 1 ou 2, **caractérisé en ce que** la vitesse de séparation est comprise entre 1,5 et 4,5 m/s, de préférence 1,7 et 3,5 m/s.

4. Procédé selon l'une des revendications 1 à 3, **caractérisé en ce que** la séparation à air est effectuée dans un séparateur conique.

5. Procédé selon l'une des revendications 1 à 3, **caractérisé en ce que** la séparation à air est effectuée dans un séparateur en zigzag.

6. Procédé selon l'une des revendications 1 à 5, **caractérisé en ce que** le mélange de papiers est ramolli avant la pulvérisation dans une unité de ramollissement.

7. Procédé selon l'une des revendications 1 à 6, **caractérisé en ce que** la fraction de produits légers est décomposée dans un cyclone en la fraction de désencrage et en le flux d'air.

8. Procédé selon l'une des revendications 1 à 7, **caractérisé en ce que** la fraction est de nouveau triée par reconnaissance de couleur et/ou NIR.

9. Dispositif de triage d'un mélange de papiers,
avec un pulvérisateur (1) destiné à pulvériser le mélange de papiers, et
un séparateur à air (2) monté en aval du pulvérisateur (1) destiné à séparer le mélange de papiers pulvérisé en une fraction de produits lourds et une fraction de produits légers,
la fraction de produits lourds étant constituée de papiers mélangés et la fraction de produits légers étant constituée par le désencrage,
le séparateur à air (2) présentant une section de triage dans laquelle une vitesse de séparation peut être réglée entre 1 et 5 m/s.

10. Dispositif selon la revendication 9, **caractérisé en ce que** le pulvérisateur (1) est conformé en granulateur ou en cisaille rotative.

11. Dispositif selon la revendication 9 ou 10, **caractérisé en ce que** le pulvérisateur (1) est équipé de moyens de pulvérisation destinés à pulvériser à une taille dans la plage de 40 à 100 mm.

12. Dispositif selon l'une des revendications 9 à 11, **caractérisé en ce que** le séparateur à air (2) est conformé en séparateur conique.

13. Dispositif selon l'une des revendications 9 à 11, **caractérisé en ce que** le séparateur à air (2) est conformé en séparateur en zigzag.

14. Dispositif selon l'une des revendications 9 à 13, **caractérisé en ce qu'**un séparateur à cyclone (3) destiné à séparer la fraction de désencrage de la fraction de produits légers est monté en aval du séparateur à air (2).

15. Dispositif selon l'une des revendications 9 à 14, **caractérisé en ce qu'**une unité de ramollissement (5) est montée en amont du pulvérisateur (1).

16. Dispositif selon la revendication 14, **caractérisé en ce qu'**un dispositif de triage (4) fonctionnant par reconnaissance de couleur et/ou NIR pour la fraction de désencrage est monté en aval du séparateur à cyclone (3).

17. Utilisation d'un dispositif selon l'une des revendications 9 à 16 en vue d'obtenir une fraction de désencrage maximale à partir d'un mélange de vieux papiers.
